**Europäisches Patentamt**

**European Patent Office**

**Office européen des brevets**

(19)

(11) Veröffentlichungsnummer: **0 082 917**
**B1**

(12)

# EUROPÄISCHE PATENTSCHRIFT

(45) Veröffentlichungstag der Patentschrift:
**29.01.86**

(51) Int. Cl.⁴: **B 23 K 20/22**

(21) Anmeldenummer: **82105958.1**

(22) Anmeldetag: **03.07.82**

(54) **Verfahren zur Herstellung eines Behälters aus Molybdän.**

(30) Priorität: **24.12.81 DE 3151342**

(43) Veröffentlichungstag der Anmeldung:
**06.07.83 Patentblatt 83/27**

(45) Bekanntmachung des Hinweises auf die Patenterteilung:
**29.01.86 Patentblatt 86/5**

(84) Benannte Vertragsstaaten:
**AT BE CH DE FR GB LI SE**

(56) Entgegenhaltungen:
**BE - A - 635 861**
**CH - A - 406 777**
**GB - A - 2 042 393**

**NASA TECH BRIEF, Lewis Research Center, B74-10124, Nr. 6, November 1974, Springfield, Virginia, USA. "Fabrication of Complex Structures or Assemblies by Hot Isostatic Pressure (HIP) Welding"**

(73) Patentinhaber: **Heraeus Elektroden GmbH, Heraeusstrasse 12 - 14, D-6450 Hanau/Main (DE)**

(72) Erfinder: **Heinke, Harri, Feldstrasse 4, D-6455 Erlensee (DE)**
Erfinder: **Schreiber, Franz, Dr., Rüdigheimerstrasse 8, D-6450 Hanau (DE)**
Erfinder: **Werdecker, Waltraud, Gustav-Hoch-strasse 11, D-6450 Hanau (DE)**

(74) Vertreter: **Heinen, Gerhard, Dr., W.C. Heraeus GmbH Zentralbereich Patente und Lizenzen Heraeusstrasse 12-14, D-6450 Hanau (DE)**

**Beschreibung**

Die Erfindung bezieht sich auf ein Verfahren zur Herstellung eines Behälters aus Molybdän, der ein hohlzylinderförmiges Teil und einen Boden aufweist, die durch Verschweissen infolge interatomarer Diffusion unter Anwendung von Druck und hoher Temperatur miteinander verbunden werden.

Es hat nicht an Versuchen gefehlt, Molybdänbehälter durch Verschweissen von Molybdänblechen herzustellen, weil ein hoher Bedarf an solchen Behältern, insbesondere in der chemischen Verfahrenstechnik, besteht. Diese Versuche verliefen, jedoch nicht befriedigend, weil das Verschweissen von Molybdänblechen zu Schweissnähten führt, die spröde und daher mit einer hohen Bruchgefahr behaftet sind.

Bekannt ist aus der DE-OS 2 035 354 ein Verfahren zur Herstellung von nahtlosen Molybdänbehältern. Hierbei wird zunächst durch Formen ein Rohling aus einer tonartigen Masse, einer Mischung aus Molybdänpulver und einem wärmeflüchtigen Binder, hergestellt, vorzugsweise durch Strangpressen. In den Rohrrohling wird ein Molybdänstopfen eingesetzt und danach die gesamte Anordnung zu einem Behälter gesintert. Man erhält also als Ergebnis einen metallurgisch einheitlichen Behälter, wobei Stopfen und Rohr durch eine interatomare Diffusion miteinander verbunden sind. Die Anwendung des pulvermetallurgischen Herstellverfahrens erlaubt es, nur Behälter einfacher Geometrie herzustellen. Ausserdem sind Durchmesserabmessungen von mehr als 30 cm, wenn überhaupt, dann nur mit erheblichem technischem Aufwand möglich.

Der Erfindung liegt die Aufgabe zugrunde, ein Verfahren bereitzustellen, welches die Herstellung von Molybdänbehältern mit dünnen Wandstärken auch für Behälterdurchmesser von mehr als 50 cm in einfacher Weise ermöglicht.

Gelöst wird diese Aufgabe durch ein Verfahren der eingangs charakterisierten Art erfindungsgemäss dadurch, dass in eine der Form des Behälters angepasste Kapsel wenigstens ein das hohlzylinderförmige Teil bildendes erstes Molybdänblech mit seinen Längskanten aneinanderstossend oder einander überlappend und wenigstens ein den Boden bildendes zweites Molybdänblech, das mit seiner Oberkante an die Unterkante des ersten Molybdänbleches stösst oder diese überlappt, eingebracht, die Kapsel gasdicht verschlossen, danach die Kapsel in einem Autoklaven während einer Zeitdauer von wenigstens 15 Minuten einem allseitigen Druck von 700 bis 3000 bar unter gleichzeitiger Aufrechterhaltung einer Temperatur von 1200 bis 1500°C ausgesetzt und nach dem Abkühlen die Kapsel entfernt wird.

Weitere vorteilhafte Merkmale des erfindungsgemässen Verfahrens ergeben sich aus den Unteransprüchen 2 bis 6.

Erfindungsgemäss hergestellte Molybdänbehälter können vorteilhafterweise auch als Auskleidungen in einen Stützbehälter eingesetzt werden.

Das erfindungsgemässe Verfahren erlaubt die Herstellung von nahtlosen Molybdänbehältern nicht nur einfacher Geometrie, sondern auch komplizierter Geometrie, wobei Behälterwandstärken bis herab zu 1 mm bei Durchmesser von mehr als 50 cm erreichbar sind. Die nach dem erfindungsgemässen Verfahren hergestellten Molybdänbehälter sind gas- und flüssigkeitsdicht und bei ihnen besteht keine Gefahr des Brechens von Verbindungsstellen, weil das Herstellverfahren zu keiner Versprödung in der Verbindungsstelle führt. Selbst Molybdänbehälter mit einem Stutzen lassen sich nach dem erfindungsgemässen Verfahren ohne grossen technischen Aufwand herstellen.

Anhand der Figuren 1 bis 3 wird das Herstellverfahren näher erläutert.

Es zeigen:

Fig. 1 die Herstellung eines Molybdänbehälters mit einem Flanschansatz

Fig. 2 einen Vertikalschnitt durch einen Molybdänbehälter mit einem Stutzen,

Fig. 3 einen Ausschnitt einer Verbindungsstelle in einem Vertikalschnitt.

Mit der Bezugsziffer 1 ist eine Kapsel bezeichnet, die aus einem Kapselaussenteil 1' und einem Kapselinnenteil 1'' besteht. Zunächst werden in den Kapselaussenteil 1' Molybdänbleche 2, 3, 4, 5 einer Wandstärke von beispielsweise 2 mm eingesetzt. Das Bodenblech 2 stösst mit seiner Oberkante an die Unterkante des Molybdänblechs 3. Die Längskanten des zu einem hohlzylinderförmigen Teil gebogenen Molybdänblechs 3 stossen ebenfalls aneinander — in der Figur nicht dargestellt —. Die Oberkante des Molybdänblechs 3 überlappt die Unterkante des Molybdänblechs 4, während das den Flanschansatz 5 bildende Molybdänblech bei 6 stossend an der Oberkante des Molybdänblechs 4 anliegt. Danach wird das Kapselinnenteil 1'' eingebracht und das Kapselinnenteil 1'' mit dem Kapselaussenteil 1' gasdicht verschweisst. Der so hergestellte gekapselte Formkörper wird dann in einen Autoklaven eingebracht und darin während einer Zeitdauer von 80 Minuten und einem Druck von 1500 bar einer Temperatur von 1340°C ausgesetzt. Durch diese Behandlung verbinden sich die einzelnen Molybdänblechteile an den Stoss- und Überlappungskanten miteinander zu einem einheitlichen Molybdänbehälter. Nach dem Abkühlen wird die Kapsel mechanisch, beispielsweise spananhebend, oder chemisch, beispielsweise durch Beizen, entfernt. Als Kapselmaterial wird Stahl verwendet.

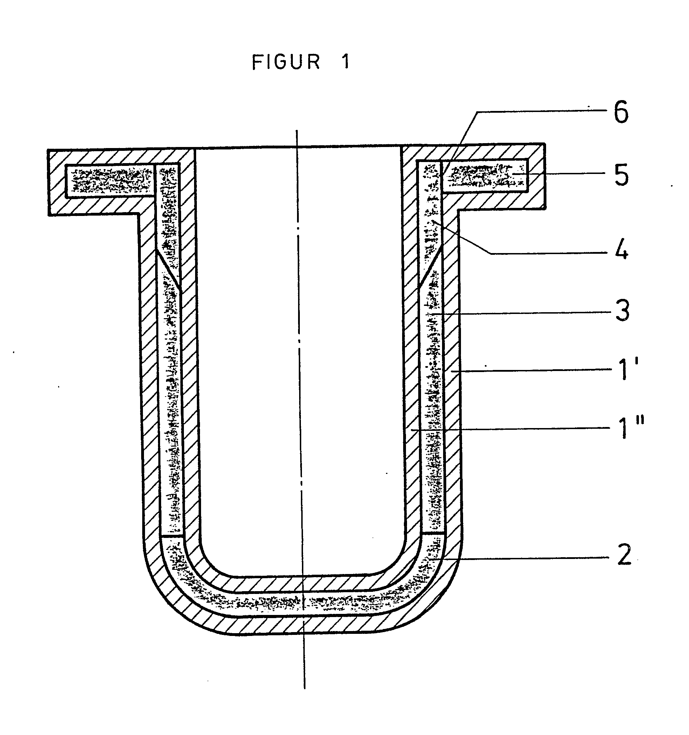

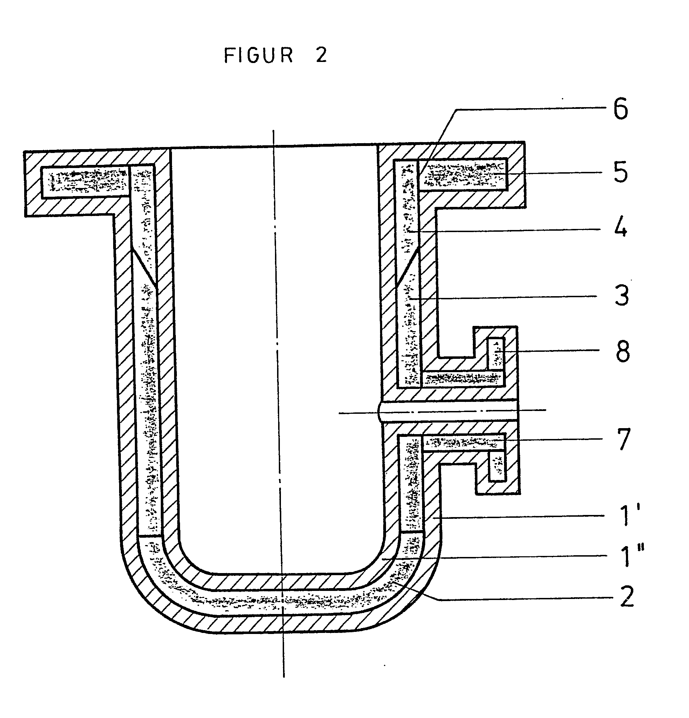

Fig. 2 unterscheidet sich von dem in Fig. 1 dargestellten Ausführungsbeispiel im wesentlichen dadurch, dass hier die Herstellung eines Molybdänbehälters mit einem Stutzen dargestellt ist, das Molybdänblech 3 eine Öffnung aufweist und an diese Öffnung stossend das Molybdänblech 7 und an dieses stossend das Stutzenflanschteil 8 angesetzt ist. Die übrigen Bezugsziffern entsprechen denen der Fig. 1, ebenfalls die einzuhaltenden Druck- und Temperaturbedingungen sowie die Behandlungszeitdauer. Als Ergebnis erhält man dann einen Molybdänbehälter mit einem seitlichen Stutzen. Anstelle eines seitlichen Stutzens kann selbstverständlich in analoger Weise auch ein Bodenstutzen oder beides vorgesehen werden.

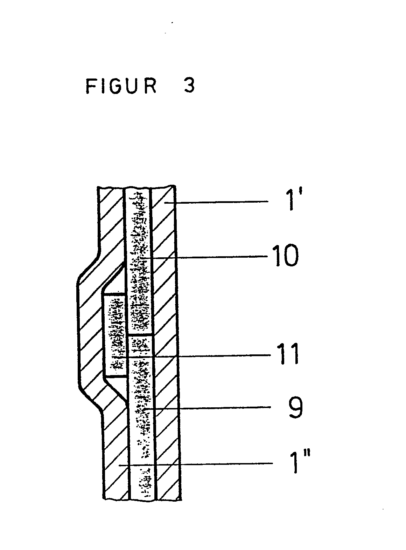

Der in Fig. 3 dargestellte Ausschnitt einer Verbindungsstelle zweier Molybdänbleche zeigt, dass die aneinanderstossenden Kanten der Molybdänbleche 9 und 10 mit einer Molybdänmanschette 11 abgedekt sind. Mit der Bezugsziffer 1' ist wieder das Kapselaussenteil bezeichnet, mit der Bezugsziffer 1'' das Kapselinnenteil.

**Patentansprüche**

1. Verfahren zur Herstellung eines Behälters aus Molybdän, der ein hohlzylinderförmiges Teil und einen Boden aufweist, die durch Verschweissen infolge interatomarer Diffusion unter Anwendung von Druck und hoher Temperatur miteinander verbunden werden, dadurch gekennzeichnet, dass in eine der Form des Behälters angepasste Kapsel (1', 1'') wenigstens ein das hohlzylinderförmige Teil bildendes erstes Molybdänblech (3) mit seinen Längskanten aneinanderstossend oder einander überlappend und wenigstens ein den Boden bildendes zweites Molybdänblech (2), das mit seiner Oberkante an die Unterkante des ersten Molybdänbleches stösst oder diese überlappt, eingebracht, die Kapsel gasdicht verschlossen, danach die Kapsel in einem Autoklaven während einer Zeitdauer von wenigstens 15 Minuten einem allseitigen Druck von 700 bis 3000 bar unter gleichzeitiger Aufrechterhaltung einer Temperatur von 1200 bis 1500°C ausgesetzt und nach dem Abkühlen die Kapsel entfernt wird.

2. Verfahren nach Anspruch 1, dadurch gekennzeichnet, dass die verschlossene Kapsel einem Druck von 1200 bis 1600 bar, einer Temperatur von 1300 bis 1400°C während einer Dauer von 60 bis 90 Minuten ausgesetzt wird.

3. Verfahren nach den Ansprüchen 1 und/oder 2, dadurch gekennzeichnet, dass die Stossstellen des ersten und/oder des zweiten Molybdänbleches wenigstens einseitig mit einer Molybdänblechmanschette (11) abgedeckt werden.

4. Verfahren nach den Ansprüchen 1 bis 3, dadurch gekennzeichnet, dass das erste (3) und/oder das zweite (2) Molybdänblech mit einer Öffnung verwendet wird, und an diese Öffnung wenigstens ein drittes Molybdänblech (7) stossend zur Bildung eines Stutzens angesetzt wird.

5. Verfahren nach einem oder mehreren der vorhergehenden Ansprüche, dadurch gekennzeichnet, dass als Kapselwerkstoff Stahl verwendet wird.

6. Verfahren nach einem oder mehreren der vorhergehenden Ansprüche, dadurch gekennzeichnet, dass Molybdänbleche einer Stärke von 0,5 bis 8 mm verwendet werden.

7. Verwendung eines nach dem Verfahren gemäss den Ansprüchen 1 bis 6 hergestellten Molybdänbehälters als Auskleidung eines Stützbehälters.

**Claims**

1. Method for producing a container of molybdenum, which has a hollow cylindrical section and a base, which are joined together by interwelding caused by interatomic diffusion under application of pressure and high temperature, characterised in that a capsule matching the shape of the container has placed in it at least one first molybdenum sheet forming the hollow cylindrical section with its longitudinal edges abutting or overlapping each other and at least one second molybdenum sheet forming the bottom which has its upper edge abutting against the bottom edge of the first molybdenum sheet or overlaps the same, that the capsule is sealed in gastight manner, whereupon the capsule is exposed to an omnilateral pressure of 700 to 3000 bar whilst maintaining a temperature of 1200 to 1500°C for a period of at least 15 minutes, and that the capsule is removed after cooling.

2. Method according to claim 1, characterised in that the sealed capsule is exposed to a pressure of 1200 to 1600 bar, to a temperature of 1300 to 1400°C for a period of 60 to 90 minutes.

3. Method according to claim 1 and/or 2, characterised in that the joints of the first and/or of the second molybdenum sheet are covered on one side at least with a molybdenum sheet sleeve.

4. Method according to claims 1 to 3, characterised in that a first and/or second molybdenum sheet comprising an opening is utilised, and that at least a third molybdenum sheet is offered up to this opening in a butt joint to form a pipe stub.

5. Method according to one or more of the preceding claims, characterised in that steel is utilised as the material for the capsule.

6. Method according to one or more of the preceding claims, characterised in that molybdenum sheets having a thickness of 0.5 to 8 mms are used.

7. Utilisation of a molybdenum container produced by the method according to claims 1 to 6, as a liner for a supporting container.

**Revendications**

1. Procédé pour fabriquer un récipient de molybdène, qui comporte une partie cylindrique creuse et un fond, selon lequel on assemble la partie cylindrique avec le fond par soudage par suite de diffusion interatomique sous application de pression et d'une haute température, caractérisé en ce que l'on utilise une capsule adaptée à la forme du récipient, dans laquelle on dispose au moins une première tôle de molybdène destinée à former la partie cylindrique creuse, de manière que ses bords longitudinaux se joignent bout à bout ou avec recouvrement, et au moins une seonde tôle de molybdène, destinée à former le fond, dont le bord supérieur rejoint bout à bout ou avec recouvrement le bord inférieur de la première tôle, on ferme la capsule étanche au gaz, on expose la capsule ensuite pendant au moins 15 min dans un autoclave à une pression de 700 à 3000 bars agissant de tous côtés, en maintenant en même temps une température de 1200 à 1500°C, et, on enlève la capsule après refroidissement.

2. Procédé selon la revendication 1, caractérisé en ce que l'on expose la capsule fermée à une pression de 1200 à 1600 bars et une température de 1300 à 1400°C pendant une durée d'au moins 60 à 90 min.

3. Procédé selon la revendication 1 et/ou 2, caractérisé en ce que les joints de la première et/ou de la seconde tôle de molybdène sont recouverts, sur au moins un côté, d'un manchon de tôle de molybdène.

4. Procédé selon les revendications 1 à 3, caractérisé en ce que l'on utilise une première et/ou une seconde tôle de molybdène présentant une ouverture et en ce que l'on dispose au moins une troisième tôle de molybdène par un bout contre le bord de cette ouverture en vue de la formation d'une tubulure.

5. Procédé selon une ou plusieurs revendications précédentes, caractérisé en ce que le matériau de la capsule est de l'acier.

6. Procédé selon une ou plusieurs revendications précédentes, caractérisé en ce que les tôles de molybdène ont une épaisseur de 0,5 à 8 mm.

7. Utilisation d'un récipient de molybdène fabriqué par le procédé selon les revendications 1 à 6 comme garnissage d'un récipient support.

FIGUR 1

FIGUR 2

FIGUR 3

1'
10
11
9
1"